# DEMANDE DE BREVET EUROPEEN

(11) **EP 4 635 279 A1**
(43) Date de publication de la demande: **22.10.2025**
(21) Numéro de dépôt: 25171138.8
(22) Date de dépôt: 17.04.2025
(51) Int. Cl.: A01B 3/46, A01B 59/042, A01B 59/043, A01B 59/06, A01B 59/041

(54) **DISPOSITIF D ATTELAGE À TROIS POINTS D ACCROCHAGE POUR CHARRUE ET CHARRUE POURVUE D'UN TEL DISPOSITIF**

(30) Priorité: 19.04.2024 FR 2404073
(71) Demandeur: Kuhn-Huard S.A.S, 44110 Chateaubriant (FR)
(72) Inventeur: DUCROQUET, Frédéric, 44110 VILLEPOT (FR)
(74) Mandataire: Hager, Esther Evelyne

(57) **Abrégé**

L'invention concerne un dispositif d'attelage (1) à trois points d'accrochage pour charrue comprenant un corps support (1') sur lequel est monté une potence (5) composée d'une partie arrière fixe (6) et d'une partie avant mobile (6') qui porte le point d'accrochage supérieur (2") et qui est doublement articulé au niveau de son extrémité inférieure (6") par rapport au châssis de potence (6) et au corps support (1'), ce par deux montages à pivotement, à savoir, d'une part, autour d'un premier axe (AP1) perpendiculaire au plan de référence (PR) et, d'autre part, autour d'un second axe (AP2) perpendiculaire au premier axe (AP1) et situé dans le plan de référence (PR), le pivotement autour du second axe (AP2) permettant de modifier l'inclinaison du bras mobile (6') par rapport au châssis de potence fixe (6) et la position du bras mobile (6') contre le châssis de potence fixe (6) étant verrouillée par un moyen de blocage (15).

Dispositif d'attelage (1) caractérisé en ce qu'il comprend également un moyen d'autoalignement (7) configuré pour amener le bras mobile (6') vers une position en rotation déterminée autour du premier axe (AP1) lors d'un pivotement du bras mobile (6') en direction du châssis de potence (6) autour du second axe (AP2).

## Description

La présente invention concerne le domaine du machinisme agricole, en particulier les charrues attelées à un véhicule tracteur lors de leur utilisation et leur transport, notamment les charrues du type porté réversible. Dans ce contexte, l'invention porte sur un dispositif d'attelage à trois points d'accrochage pour charrue, notamment pour charrue portée réversible, ainsi qu'une charrue pourvue d'un tel dispositif.

L'invention vise plus particulièrement un dispositif d'attelage à trois points d'accrochage pour charrue, notamment pour charrue portée réversible, avec deux points d'accrochage inférieurs mobiles dans un plan dit de référence et un point d'accrochage supérieur, ce dispositif comprenant un corps support sur lequel est monté une potence composée de deux parties, à savoir, vu selon la direction d'avance, une partie arrière formant châssis de potence fixe et une partie avant formant bras mobile et portant le point d'accrochage supérieur, le bras mobile étant doublement articulé au niveau de son extrémité inférieure par rapport au châssis de potence et au corps support, ce par deux montages à pivotement, à savoir, d'une part, autour d'un premier axe perpendiculaire au plan de référence et, d'autre part, autour d'un second axe perpendiculaire au premier axe et situé dans le plan de référence, le pivotement autour du second axe permettant de modifier l'inclinaison du bras mobile par rapport au châssis de potence fixe et la position du bras mobile contre le châssis de potence fixe (6) étant verrouillée par un moyen de blocage.

Un tel dispositif d'attelage est notamment connu des documents suivants : FR 3126841, FR 3126842 et FR 3126843, au nom de la demanderesse. Ce dispositif d'attelage en deux parties convient particulièrement à une charrue équipée d'une roue qui est en appui au sol dans la configuration de transport. Pour le transport, le bâti de la charrue repose d'une part sur le sol au moyen de la roue et d'autre part sur le tracteur en étant attelé notamment aux deux points d'accroche inférieurs. Le point d'accroche supérieur est mobile par rapport à la partie arrière de la potence pour épouser les éventuelles dénivellations du terrain lors du déplacement. La charrue est donc traînée à l'arrière du tracteur comme une remorque.

Ce dispositif d'attelage peut passer d'une configuration de transport dans laquelle la partie avant de la potence bascule d'une part autour de l'articulation d'axe horizontal et d'autre part pivote autour de l'articulation d'axe vertical, à une configuration de travail dans laquelle les parties avant et arrière de la potence sont solidaires l'une par rapport à l'autre. Les parties avant et arrière sont solidarisées mécaniquement entre elles, par le biais d'un moyen de blocage.

Dans la configuration de transport de la charrue, la partie avant de la potence dispose d'un degré de liberté en rotation autour d'une articulation d'axe vertical (premier axe) pour suivre le tracteur, notamment pour une meilleure mobilité dans les virages. La partie avant dispose également d'un degré de liberté en rotation autour d'un axe horizontal pour permettre à la charrue de suivre les dénivellations lors de la circulation sur les routes et chemins.

Dans la configuration de travail, la partie avant est bloquée par solidarisation mécanique avec verrouillage avec la partie arrière comme indiqué ci-dessus.

Or, pour revenir à une configuration travail (partie avant bloquée) à partir d'une configuration transport (partie avant libre), on abaisse le relevage du tracteur et la partie avant bascule vers la partie arrière.

Dans certains cas, il arrive que la partie avant ne soit pas bien orientée (elle peut être complètement de travers) et la partie avant risque alors d'être déformée/cassée.

De plus, si l'orientation de la partie avant n'est pas bonne lors du changement de configuration, il sera impossible d'abaisser le moyen de blocage et par conséquent d'utiliser la charrue pour le labour.

La présente invention a pour but de proposer une solution permettant de pallier cet inconvénient.

A cet effet, elle a pour objet un dispositif d'attelage du type visé en introduction ci-dessus, caractérisé en ce qu'il comprend également un moyen d'autoalignement configuré pour amener le bras mobile vers une position en rotation déterminée autour du premier axe lors d'un pivotement du bras mobile en direction du châssis de potence autour du second axe.

L'invention sera mieux comprise, grâce à la description ci-après, qui se rapporte à des modes de réalisation préférés, donnés à titre d'exemples non limitatifs, et expliqués avec référence aux dessins schématiques annexés, dans lesquels :
[Fig. 1] est une vue en perspective d'une charrue dans une configuration de transport en accord avec l'invention, la partie avant de la potence du dispositif d'attelage de cette charrue étant orientée avec inclinaison par rapport à ses deux axes de pivotement par rapport à sa partie arrière ;
[Fig. 2] est une représentation du dispositif d'attelage de la charrue de la figure 1, selon la même perspective mais à une échelle différente ;
[Fig. 3] est une vue en perspective depuis l'arrière du dispositif d'attelage, dans laquelle la partie avant de la potence est alignée avec la partie arrière, le dispositif d'attelage étant en configuration de travail et le moyen d'autoalignement étant en position engagé selon un autre exemple de réalisation (par rapport à celui de la figure 2), la paroi du fond de la partie arrière de la potence ayant été enlevée pour une meilleure visualisation ;
[Fig. 4A] et [Fig. 4B] sont des vues partielles en perspective, selon deux directions différentes, du dispositif d'attelage représenté sur les figures 1 et 2, une paroi latérale de la partie arrière de la potence (figure 4A) et une partie latérale de la partie avant de la potence (figure 4B) ayant été enlevée pour mieux visualiser le moyen d'autoalignement selon l'invention ;
[Fig. 5] est une vue en perspective sensiblement similaire à celle de la figure 4A, mais selon une direction légèrement différente et avec le moyen d'autoalignement dans une position escamotée et non engagée ;
[Fig. 6] est une vue partielle en perspective de l'objet de la figure 4B ;
[Fig. 7A] et [Fig. 7B] sont des vues en perspective selon deux directions différentes d'un mode de réalisation du moyen d'autoalignement, sensiblement en forme de Y, faisant partie du dispositif d'attelage selon l'invention.

L'invention vise un dispositif d'attelage (1) à trois points d'accrochage (2, 2', 2") pour charrue (3), notamment pour charrue portée réversible, avec deux points d'accrochage inférieurs (2, 2') mobiles dans un plan dit de référence (PR) et un point d'accrochage supérieur (2"). Ce dispositif d'attelage (1) comprend un corps support (1') sur lequel est monté une potence (5) composée de deux parties (6 et 6'), à savoir, vu selon la direction d'avance (A), une partie arrière (6) formant châssis de potence fixe et une partie avant (6') formant bras mobile et portant le point d'accrochage supérieur (2"). Le bras mobile (6') est doublement articulé au niveau de son extrémité inférieure (6") par rapport au châssis de potence (6) et au corps support (1'), ce par deux montages à pivotement, à savoir, d'une part, autour d'un premier axe (AP1) perpendiculaire au plan de référence (PR) et, d'autre part, autour d'un second axe (AP2) perpendiculaire au premier axe (AP1) et situé dans le plan de référence (PR), le pivotement autour du second axe (AP2) permettant de modifier l'inclinaison du bras mobile (6') par rapport au châssis de potence fixe (6). La position du bras mobile (6') contre le châssis de potence fixe (6) étant verrouillée par un moyen de blocage (15).

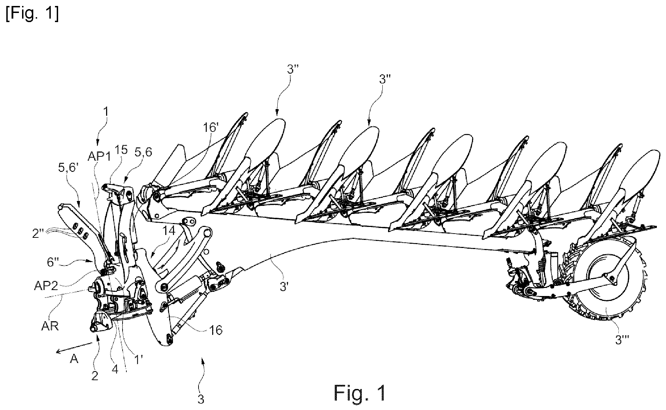

La figure 1 représente une charrue (3) comprenant un bâti (3') avec des corps de labour (3"), au moins une roue (3"') et un dispositif d'attelage (1) avec une potence (5 ; 6, 6'). Il s'agit d'un dispositif d'attelage (1) à trois points d'accrochage (2, 2', 2") pour son attelage à l'arrière d'un tracteur (non représenté). On dit que la charrue (3) est portée. Le bâti (3') porte deux groupes de corps de labour (3") arrangés de part et d'autre pour un travail de labour respectivement à droite et à gauche par rapport à une direction d'avance (A). La charrue (3) représentée est réversible. Le bâti (3') est relié à un corps support (1') du dispositif d'attelage (1) portant la potence (5) par une liaison pivot définissant un axe de retournement (AR) pour le passage d'une configuration de travail à l'autre. La roue (3"') est montée à l'arrière du bâti (3'), elle peut également être montée latéralement sur le bâti (3'). La roue (3"') assure la régulation de la profondeur de labour dans la configuration de travail et soulage le dispositif d'attelage trois points du tracteur lors du transport. En effet, la charge de la charrue (3) est répartie d'une part sur le tracteur via le dispositif d'attelage (1) et d'autre part sur la roue (3") qui est en appui sur le sol. La charrue (3) est représentée dans sa configuration de transport sur la figure 1. Dans cette configuration de transport, le point d'accrochage supérieur (2"), associé à la bielle supérieure (non visible), est rendu libre pour que la charrue (3) puisse suivre les dénivellations du terrain. Ce point d'accrochage supérieur (2") est triple sur les figures annexées. La potence (5) dispose de trois positions d'attelage à différentes hauteurs pour le point d'accrochage supérieur (2"). Le choix de la position d'accrochage de la bielle supérieure est effectué en fonction du tracteur et du réglage souhaité du point de convergence. La charrue (3) est ainsi traînée derrière le tracteur comme une remorque en étant attachée par les points d'accrochage inférieurs (2 et 2').

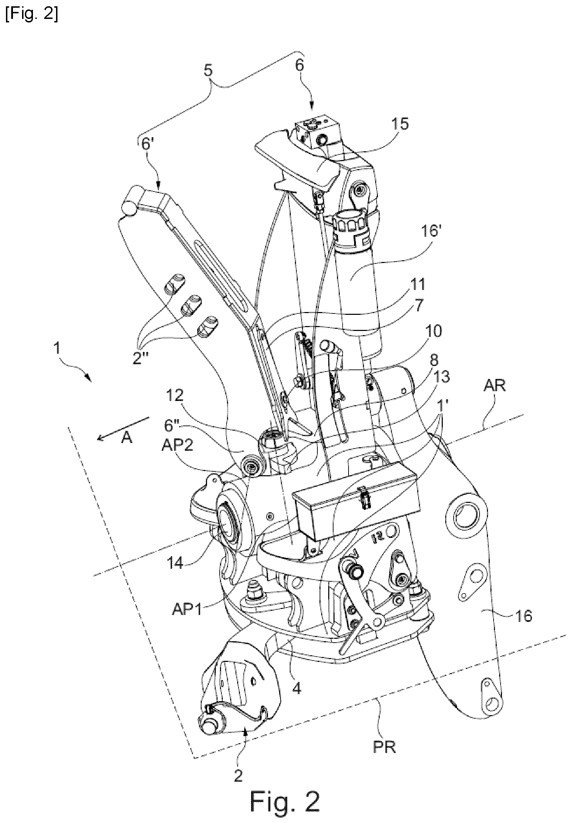

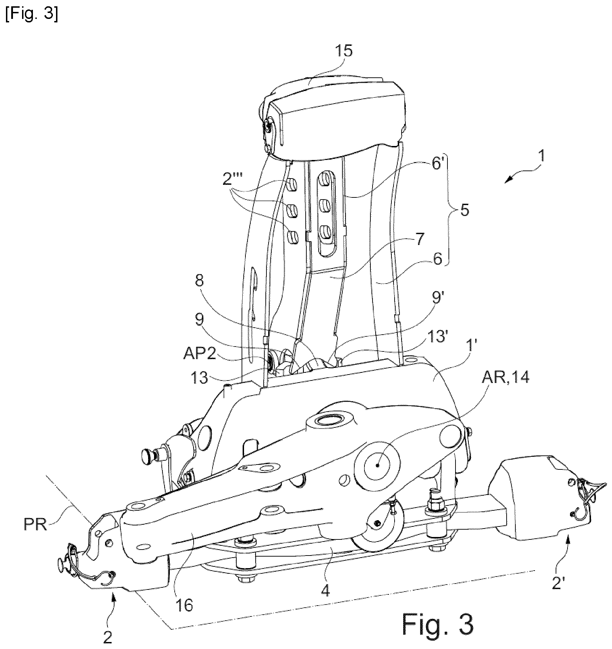

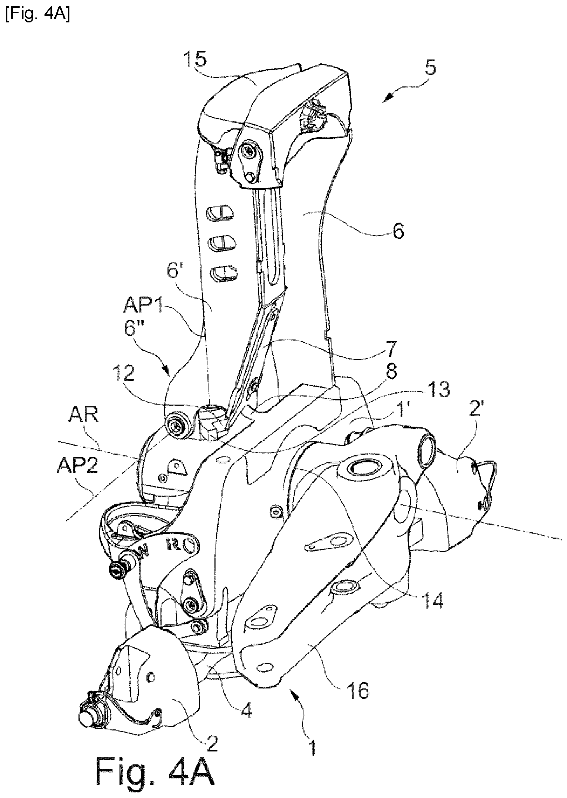

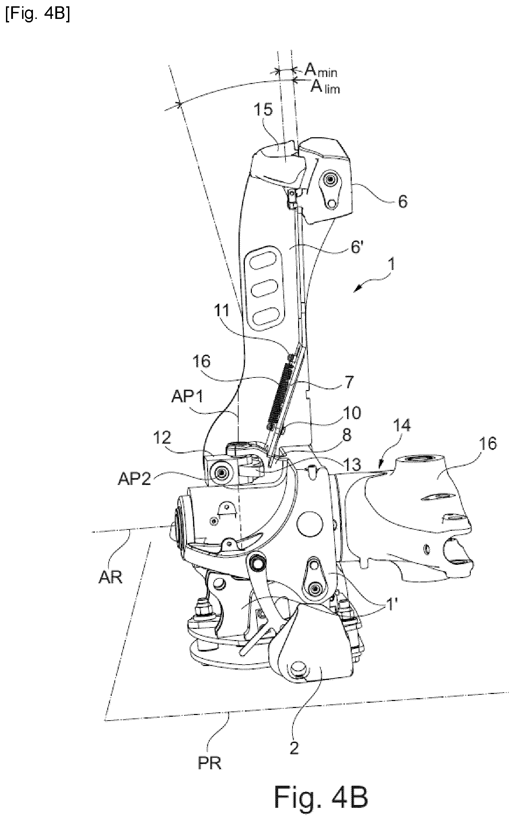

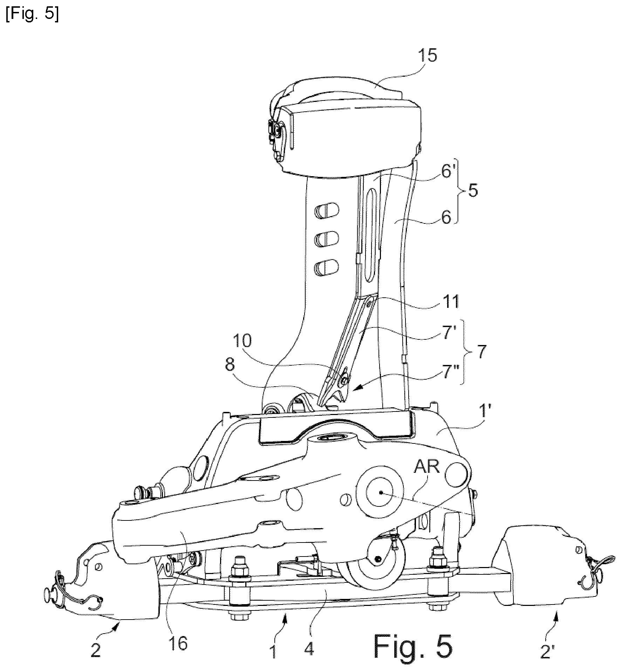

Les figures 2 à 6 illustrent plus particulièrement le dispositif d'attelage (1) à trois points d'accrochage (2, 2', 2") pour charrue (3), notamment pour charrue portée réversible. Ce dispositif d'attelage (1) comprend une potence (5) composée de deux parties constitutives (6 et 6'), à savoir, vu selon la direction d'avance (A), une partie arrière (6) formant un châssis de potence fixe, rigidement solidaire du cops support (1') qui la porte, et une partie avant (6') formant un bras mobile. La partie avant (6') porte le point d'accrochage supérieur (2") et la partie arrière (6) porte les deux points d'accrochage inférieurs (2, 2'), par l'intermédiaire du corps support (1'). Dans l'exemple de réalisation représenté, les deux points d'accrochage inférieurs (2, 2') sont prévus sur une traverse d'attelage (4). Cette traverse (4) est montée, avec faculté de rotation et de translation, entre deux plaques faisant partie du corps support (1') et arrangées sous la potence (5) et notamment sous la partie arrière (6). Les deux plaques recevant entre elles la traverse (4) définissent le plan de référence (PR) comme le montrent les figures 2 et 4B. Le bras mobile (6') est doublement articulé au niveau de son extrémité inférieure (6") par rapport au corps support (1') et au châssis de potence (6), ce par deux montages à pivotement, d'une part, autour d'un premier axe (AP1) perpendiculaire au plan de référence (PR) et, d'autre part, autour d'un second axe (AP2) perpendiculaire au premier axe (AP1) et situé dans le plan de référence (PR). Ces deux articulations à pivotement forment ensemble un cardan entre le bras mobile (6') et le corps support (1'). Le pivotement du bras mobile (6') autour du premier axe (AP1), en concomitance avec la rotation de la traverse (4), permet de modifier l'inclinaison de l'axe du bâti (3') de la charrue (3) par rapport à l'axe médian longitudinal du tracteur, et donc à la charrue (3) de suivre le tracteur en roulant sur la roue (3"'). La faculté de pivotement autour du premier axe (AP1) améliore la maniabilité de la charrue (3) en configuration de transport. La charrue effectue un meilleur suivi du tracteur lors des déplacements sur routes. Le pivotement autour du second axe (AP2) permet de modifier l'inclinaison du bras mobile (6') par rapport au châssis de potence fixe (6). Grâce à l'articulation autour du second axe (AP2), le bras mobile (6') est capable de pivoter vers l'avant ou vers l'arrière, en fonction de la direction d'avance (A), par rapport au châssis de potence (6). Le pivotement autour des premier et second axes (AP1, AP2) n'est pas possible ou autorisé dans la configuration de travail puisque le bras mobile (6') est alors bloqué contre le châssis de potence (6), la partie supérieure du bras mobile (6') étant solidarisée rigidement avec la partie arrière fixe (6) de la potence par le moyen de blocage (15) comme le montrent les figures 3 et 4A. Pour plus de détails sur la constitution et le fonctionnement d'un tel dispositif d'attelage, il est fait référence aux trois documents FR mentionnés ci-dessus.

La figure 2 représente le dispositif d'attelage (1), à plus grande échelle, mais avec la même orientation que sur la figure 1. Dans la configuration de transport, lorsque la partie avant (6') de la potence (5) est libérée (de la partie arrière fixe), la charrue (3) peut suivre derrière le tracteur. La partie avant (6') peut alors pivoter, autour du premier axe (AP1), pour suivre dans les virages et osciller d'avant en arrière, autour du second axe (AP2), pour suivre les variations de hauteur de la route. Le second axe (AP2) s'étend au-dessus de l'axe de retournement (AR), il est sensiblement perpendiculaire à l'axe de retournement (AR). La partie avant (6') se retrouve dans une telle position, représentée à la figure 2, lors d'une prise de virage à droite. La partie avant (6') n'est pas alignée avec la partie arrière (6), elle a pivoté par rapport au premier axe (AP1) et au second axe (AP2). Le degré de liberté en rotation autour du premier axe (AP1), sensiblement vertical, permet d'améliorer la maniabilité de la charrue et d'assurer un meilleur suivi du tracteur dans les virages. Le degré de liberté en rotation autour du second axe (AP2), sensiblement horizontal, permet un suivi des dénivellations du sol lors de la circulation sur les routes et chemins. Le second axe (AP2) est avantageusement disposé au-dessus de l'axe de retournement (AR) de la charrue (3). La rotation de la partie avant (6') autour du premier axe (AP1) est limitée par des butées (13, 13') pour garantir que le bras mobile (6') ne détériore pas le châssis de potence (6) dans la configuration de transport.

Conformément à l'invention, le dispositif d'attelage (1) comprend également un moyen d'autoalignement (7) configuré pour amener le bras mobile (6') vers une position en rotation déterminée autour du premier axe (AP1) lors d'un pivotement du bras mobile (6') en direction du châssis de potence (6) autour du second axe (AP2). D'une manière avantageuse, le moyen d'autoalignement (7) donne progressivement au bras mobile (6') une orientation convenable (convergence vers la position en rotation déterminée) au fur et à mesure de son oscillation vers l'arrière, vers le châssis de potence (6).

Grâce à ces dispositions, l'invention permet de contrôler la position du bras mobile (6') lors d'un passage d'une configuration de transport vers une configuration de travail de la charrue (3), et de s'assurer que le bras mobile (6') soit toujours bien orienté lorsqu'il bascule vers le châssis de potence (6). La présence du moyen d'autoalignement (7) sur l'une des parties arrière ou avant (6, 6') de la potence (5), permet d'éviter tout risque de déformation, voire de casse, du bras mobile (6') ou du châssis de potence (6). En effet, une orientation correcte du bras mobile (6') autour du premier axe (AP1) est donné lorsqu'il oscille vers l'arrière en direction du châssis de potence (6) par l'intermédiaire du moyen d'autoalignement (7). Un tel basculement du bras mobile (6') vers l'arrière a bien entendu lieu lors du changement de configuration de la charrue (3), notamment lors du passage de la configuration de transport à la configuration de travail. Dans la configuration de travail, le bras mobile (6') doit être assujetti par solidarisation avec verrouillage au châssis de potence (6). L'orientation correcte du bras mobile (6') doit aussi être assurée en position transport dans le cas d'une montée de côte puisque le bras mobile (6') bascule en arrière. Le risque d'endommagement du bras mobile existe dans les deux cas cités lorsqu'il est mal orienté autour de l'axe (AP1).

En accord avec une caractéristique importante de l'invention, la position en rotation déterminée autour du premier axe (AP1) du bras mobile (6') correspond à une position en rotation dans laquelle le bras mobile (6') est aligné avec le châssis de potence (6). Cette position en rotation déterminée autorise un verrouillage, du bras mobile (6') avec le châssis de potence (6) lorsque l'inclinaison entre eux est inférieure à un angle minimal (Amin). Le verrouillage du bras mobile (6') lorsqu'il est aligné avec le châssis de potence (6) peut se faire de manière automatique ou manuelle grâce au moyen de blocage (15). Le moyen de blocage (15) est verrouillé dans la configuration de travail de la charrue (3).

Sur les figures 3 et 4A, cet alignement se traduit par une confusion du plan médian (de symétrie) perpendiculaire à l'axe secondaire (AP2) avec le plan médian du châssis de potence (6), lequel comprend l'axe de retournement (AR) et correspond au plan médian du dispositif d'attelage (1). Grâce à cet alignement automatique au cours de son basculement, la solidarisation verrouillée du bras mobile (6') avec le châssis de potence (6) peut intervenir, dans sa position finale de basculement contre le châssis de potence (6), par abaissement (manuel ou automatique) du moyen de blocage (15).

Dans l'exemple de réalisation illustré sur la figure 3, le moyen d'auto alignement (7) est réalisé par l'extrémité inférieure (6") arrière du bras mobile (6') - partie de paroi arrière découpée du bras mobile (6') de la potence (5). Le moyen d'autoalignement (7) est engagé sur une partie saillante (8) du châssis de potence (6) ou corps support (1'). La partie saillante (8) est prévue sur le châssis de potence (6) ou sur le corps support (1'). Le moyen d'autoalignement (7) est avantageusement symétrique par rapport à un plan vertical médian passant par l'axe de retournement (AR) de la charrue (3). Le dispositif d'attelage (1) et le support de retournement de la charrue (3) sont représentés dans une configuration de travail sur cette figure 3. Pour une meilleure visualisation depuis l'arrière, la paroi du fond de la partie arrière fixe (6) de la potence (5) a été enlevée. Dans cette configuration de travail, la partie avant (6') est alignée avec la partie arrière (6). La position de la partie avant (6') contre la partie arrière (6) est verrouillée grâce au moyen de blocage (15). Le moyen de blocage (15) est fixé au niveau de la partie supérieure de la potence (5), notamment de la partie fixe (6). Le moyen de blocage (15) verrouille le bras mobile (6) au niveau de sa partie supérieure. La partie supérieure du bras mobile (6) s'étend à l'opposé de l'articulation autour du second axe (AP2). Grâce à ce moyen d'autoalignement (7), le bras mobile (6') se retrouve dans une position et orientation adéquates par rapport au châssis de potence ou à la partie fixe (6) lors du passage de la configuration de transport à la position de travail de la charrue. Ainsi, le moyen d'autoalignement (7) amène le bras mobile (6') vers une position en rotation déterminée autour du premier axe (AP1) lors d'un pivotement du bras mobile (6') en direction du châssis de potence (6) autour du second axe (AP2). De cette manière, le bras mobile (6') est toujours recentré par rapport au châssis de potence (6) lorsqu'il bascule vers l'arrière. Ce moyen d'autoalignement (7) présente avantageusement des zones de contact (9, 9') destinés à venir en engagement avec la partie saillante (8) et à réaliser un centrage progressif par coopération avec la partie saillante (8) lors d'un mouvement de basculement du bras mobile (6') vers le châssis de potence (6). Le moyen d'auto alignement (7) permet d'orienter le bras mobile (6') durant son basculement/pivotement vers le châssis de potence fixe (6). L'intervention du moyen d'auto alignement (7) a lieu avant que le bras mobile (6') ne soit positionné contre le châssis de potence fixe (6), le moyen d'auto alignement (7) permet un guidage de l'alignement du bras mobile (6') par rapport au châssis de potence fixe (6). Avec cet alignement, le bras mobile (6') est contre le châssis de potence fixe (6) et le verrouillage via le moyen de blocage (15) peut être réalisé.

D'une manière particulièrement avantageuse, il est prévu que le moyen d'autoalignement (7) est une pièce rapportée sur l'une ou l'autre des parties (6, 6') constitutives de la potence (5). De préférence et selon l'exemple de réalisation illustré sur les figures 2, 4A, 4B, 5, 6, 7A et 7B, le moyen d'autoalignement (7) est fixé sur le bras mobile (6'). Le moyen d'autoalignement (7) s'étend préférentiellement dans la partie inférieure du bras mobile (6'). Le moyen d'auto alignement (7) est proche du second axe (AP2), lequel est situé dans le voisinage de l'axe de retournement (AR). Le moyen d'auto alignement (7) est positionné de manière à venir en contact avec le châssis de potence (6) ou le corps support (1') du dispositif d'attelage (1), et notamment avec la partie saillante (8). Le moyen d'autoalignement (7) s'étend entre les parties arrière et avant (6, 6') de la potence (5). Afin de compenser les jeux de montage, de permettre une certaine liberté de coopération et de garantir un positionnement avec un contact effectif avec la partie saillante (8) au-delà de l'angle d'inclinaison limite (Alim), le moyen d'autoalignement (7) est avantageusement sollicité élastiquement pour un engagement avec une partie saillante (8) du châssis de potence (6). Cet engagement avec appui sous contrainte élastique, qui est effectif à partir d'un angle d'inclinaison limite (Alim), tend à solliciter le bras mobile (6'), sur lequel le moyen d'autoalignement (7) est monté, vers la position en rotation déterminée. Avec un moyen d'autoalignement (7) sous forme de pièce rapportée sur le bras mobile (6'), et mobile par rapport à ce dernier, on peut s'affranchir d'un ajustement précis de l'assemblage de la potence (5).

Selon un aspect avantageux de l'invention, le moyen d'autoalignement (7) est une pièce rapportée, comprenant une partie arrière allongée (7') par laquelle elle est montée mobile en translation sur le bras mobile (6') et une partie avant (7") destinée à venir en engagement avec une partie saillante (8) du châssis de potence (6) ou du corps support (1'). Cette partie avant (7") présente avantageusement des zones de contact (9, 9') destinés à venir en engagement avec la partie saillante (8) et à réaliser un centrage progressif par coopération avec la partie saillante (8) lors d'un mouvement de basculement du bras mobile (6') vers le châssis de potence (6).. De préférence, les zones de contact (9, 9') destinées à venir en contact en engagement avec la partie saillante (8) s'étendent à l'arrière du premier axe (AP1) compte tenu de la direction d'avance (A). Le moyen d'autoalignement (7) s'étend au-dessus de l'axe de retournement (AR) de la charrue. Le moyen d'autoalignement (7) est arrangé essentiellement verticalement, la partie avant (7"), notamment les zones de contact (9, 9'), est dirigée vers le bas.

Selon un autre aspect avantageux de l'invention, le moyen d'autoalignement (7) est une pièce rapportée et guidée en translation longitudinalement sur le bras mobile (6') par l'intermédiaire de deux arrangements coopérants pion (10, 11) / trou oblong (10', 11'), dont le premier arrangement (10, 10') sert avantageusement également pour la solidarisation du moyen d'autoalignement (7) avec le bras mobile (6') et dont le second arrangement (11, 11') sert avantageusement aussi pour la transmission de la sollicitation élastique. L'orientation de chaque trou oblong (10' et 11') est parallèle au premier axe (AP1). Le trou oblong (10', 11') est orienté sensiblement verticalement.

Conformément à un mode de réalisation pratique, ressortant des figures 2 à 7 à titre d'exemple, le moyen d'autoalignement (7) est maintenu par contrainte élastique dans une position de coulissement extrême vers l'extrémité inférieure (6") du bras mobile (6'), sans être en contact avec la partie saillante (8) du châssis de potence (6) ou du corps support (1'), lorsque l'angle d'inclinaison entre le bras mobile (6') et le châssis de potence (6) est supérieur à l'angle d'inclinaison limite (Alim). La contrainte élastique sur le moyen d'autoalignement (7) est essentiellement verticale.

Ces deux aspects possibles de l'invention et ce mode de réalisation aboutissent chacun à des solutions simples et peu coûteuses, aptes à s'intégrer dans un dispositif d'attelage existant (avantageusement celui ressortant des documents FR précités) en tant qu'améliorations, sans nécessité de modification de la construction dudit dispositif et sans interférer avec ses autres fonctionnalités.

Afin de garantir une position non opérationnelle déterminée du moyen d'autoalignement (7), laquelle permet son engagement avec la partie saillante (8) du châssis de potence (6) dès que le bras mobile (6') dépasse l'angle d'inclinaison limite (Alim), il peut être prévu que la pièce d'autoalignement (7) soit maintenue par contrainte élastique dans une position de coulissement extrême vers l'extrémité inférieure (6") du bras mobile (6'), sans être en contact avec la partie saillante (8) du châssis de potence (6) ou du corps support (1'), lorsque l'angle d'inclinaison entre le bras mobile (6') et le châssis de potence (6) est supérieur à l'angle d'inclinaison limite (Alim).

A titre d'exemple, l'angle d'inclinaison limite (Alim) peut valoir entre 10° et 20° et l'angle minimal (Amin) pour le verrouillage être compris entre 1° et 5°.

Le moyen d'autoalignement (7), et plus particulièrement de sa partie avant (7') destinée à venir en engagement coopérant avec la partie saillante (8) du châssis de potence (6), peut présenter des formes diverses en fonction de la forme de la partie (8). Les formes de la partie avant (7') sont diverses pour autant que leur coopération par venue en contact mutuel aboutisse progressivement à l'alignement recherchée entre le bras mobile (6') et le châssis de potence (6), lors de leur rapprochement mutuel par basculement du bras mobile (6').

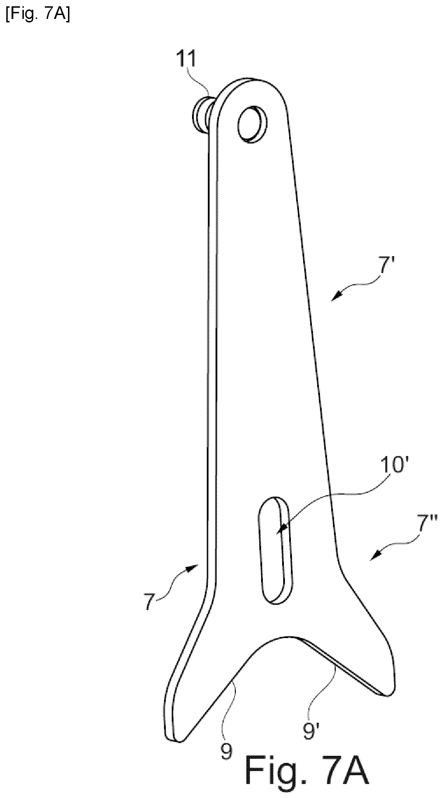

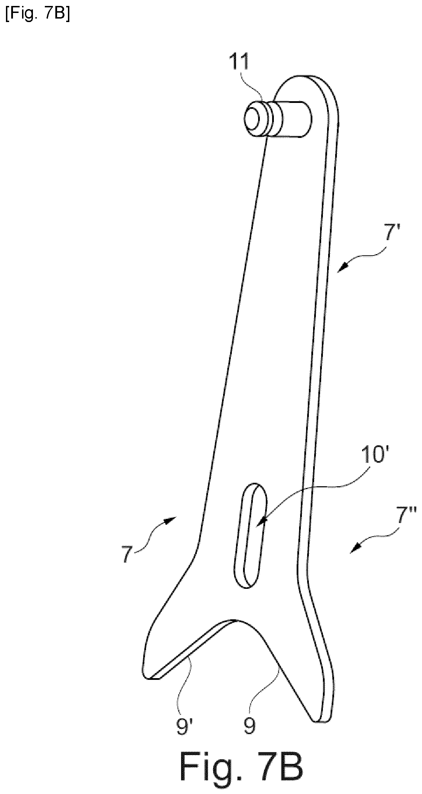

Toutefois et en accord avec une variante de réalisation avantageuse, ressortant des figures 2 à 7, le moyen d'autoalignement (7) consiste en une plaque présentant un contour sensiblement en forme de Y, avec une partie avant (7') sensiblement en forme de V et comportant deux pentes inclinées intérieures (9 et 9') de guidage concourantes, la région du fond du V présentant avantageusement une forme sensiblement complémentaire de celle d'une partie saillante (8) du châssis de potence (6) ou du corps support (1'), avec laquelle cette partie avant (7') est destinée à venir en engagement, par exemple une forme telle que représentée sur l'une des figures 7.

En vue d'éviter la mise en œuvre de pièce supplémentaire et de fournir une solution simple, fiable et robuste, la partie saillante (8) du corps support (1') ou du châssis de potence (6) engagée par le moyen d'autoalignement (7) correspond à une chape fournissant le premier axe de pivotement (AP1). Cette partie (8) vient en engagement avec le moyen d'autoalignement (7) par exemple entre les deux dents ou fourches de sa partie avant (7') comme illustré sur les figures 2 à 6.

Selon une construction pratique possible du dispositif d'attelage (1), celui-ci peut comprendre une pièce support de pivotement (12) montée articulée avec le châssis de potence (6) ou le corps support (1') par l'intermédiaire du premier axe de pivotement (AP1) et sur laquelle est montée articulée, par l'intermédiaire du second axe de pivotement (AP2), le bras mobile (6'). Cette pièce support de pivotement (12) comporte avantageusement des moyens de butée (13, 13') limitant l'excursion rotatoire du bras mobile (6') par rapport à la position en rotation déterminée autour du premier axe (AP1), par exemple par interaction avec le moyen d'autoalignement (7), également au-delà d'un angle d'inclinaison limite (Alim) entre le bras mobile (6') et le châssis de potence (6) autour du second axe (AP2). Les moyens de butée (13, 13') s'étendent derrière le premier axe (AP1).

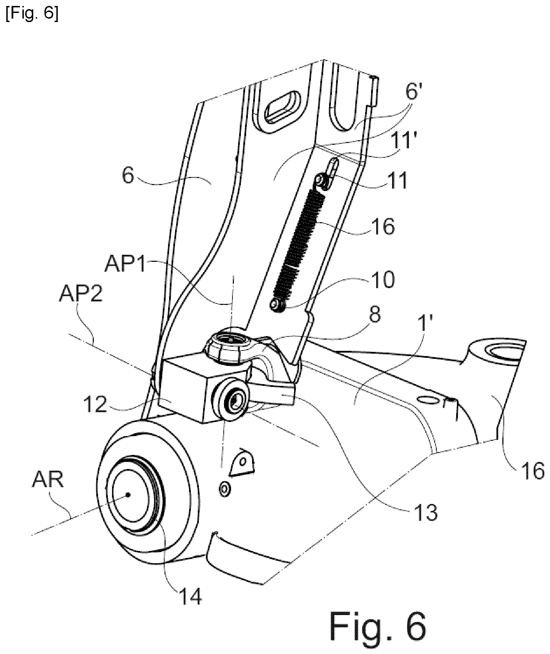

Comme le montre plus précisément la figure 6, cette pièce support de pivotement (12) correspond sensiblement au croisillon d'un joint de cardan formé entre la chape (8) à fourche et le bras mobile (6') par les deux axes de pivotement (AP1 et AP2), perpendiculaires entre eux, mais non mutuellement sécants dans le cas présent.

Avantageusement, la limitation de l'excursion rotatoire du bras mobile (6') par les moyens de butée (13, 13'), par contact par exemple avec la partie saillante (8) engagée par la pièce d'autoalignement (7), est telle que cette dernière vienne toujours en engagement avec la partie (8) dès que le bras mobile (6') atteint une position de basculement autour du second axe (AP2) correspondant à l'angle d'inclinaison limite (Alim) entre le bras mobile (6') et le châssis de potence (6).

L'invention concerne également, comme le montre à titre d'exemple la figure 1, une charrue (3), notamment une charrue portée réversible, comprenant un dispositif d'attelage (1) à trois points d'accrochage (2, 2', 2") monté à l'avant du bâti (3') de la charrue (3) portant les corps de labour (3"), cette charrue (3) étant caractérisée en ce que le dispositif d'attelage est un dispositif d'attelage (1) tel que décrit ci-dessus.

Préférentiellement, le corps support (1'), qui intègre la potence (5) et le dispositif d'attelage (1) recevant et guidant la traverse (4), et le bâti (3') sont reliés entre eux par une liaison pivot (14) définissant l'axe de retournement (AR). Selon la figure 1, le dispositif d'attelage (1) est prévu à l'avant de la charrue. Dans le cas d'une charrue réversible comme représenté sur la figure 1, le bâti (3') est relié au dispositif d'attelage (1) par l'intermédiaire d'un support d'entraînement (16) qui permet le passage d'une configuration de travail à l'autre ou d'une configuration de travail à la configuration de transport. Le support d'entraînement (16) et donc le bâti (3') pivote à l'aide d'un actionneur de retournement (16') autour de l'axe de retournement (AR).

Selon une réalisation non représentée sur les figures, le moyen d'autoalignement (7) configuré pour accompagner le basculement en arrière du bras mobile (6') autour du second axe (AP2) vers une position en rotation déterminée autour du premier axe (AP1) peut être prévu sur le châssis de potence (6). La partie saillante (8) est alors prévu sur le bras mobile (6'). Les formes destinées à venir en contact les unes des autres sont sensiblement complémentaires afin d'assurer un guidage et un centrage correct.

Bien entendu, l'invention n'est pas limitée aux modes de réalisation décrits et représentés aux dessins annexés. Des modifications restent possibles, notamment du point de vue de la constitution des divers éléments ou par substitution d'équivalents techniques, sans sortir pour autant du domaine de protection de l'invention.

## Revendications

1. Dispositif d'attelage (1) à trois points d'accrochage (2, 2', 2") pour charrue (3), notamment pour charrue portée réversible, avec deux points d'accrochage inférieurs (2, 2') mobiles dans un plan dit de référence (PR) et un point d'accrochage supérieur (2"), ce dispositif (1) comprenant un corps support (1') sur lequel est monté une potence (5) composée de deux parties (6 et 6'), à savoir, vu selon la direction d'avance (A), une partie arrière (6) formant châssis de potence fixe et une partie avant (6') formant bras mobile et portant le point d'accrochage supérieur (2"), le bras mobile (6') étant doublement articulé au niveau de son extrémité inférieure (6") par rapport au châssis de potence (6) et au corps support (1'), ce par deux montages à pivotement, à savoir, d'une part, autour d'un premier axe (AP1) perpendiculaire au plan de référence (PR) et, d'autre part, autour d'un second axe (AP2) perpendiculaire au premier axe (AP1) et situé dans le plan de référence (PR), le pivotement autour du second axe (AP2) permettant de modifier l'inclinaison du bras mobile (6') par rapport au châssis de potence fixe (6) et la position du bras mobile (6') contre le châssis de potence fixe (6) étant verrouillée par un moyen de blocage (15),
dispositif d'attelage (1) **caractérisé en ce qu'**il comprend également un moyen d'autoalignement (7) configuré pour amener le bras mobile (6') vers une position en rotation déterminée autour du premier axe (AP1) lors d'un pivotement du bras mobile (6') en direction du châssis de potence (6) autour du second axe (AP2).

2. Dispositif d'attelage (1) selon la revendication 1, **caractérisé en ce que** la position en rotation déterminée autour du premier axe (AP1) du bras mobile (6') correspond à une position en rotation dans laquelle le bras mobile (6') est aligné avec le châssis de potence (6), cette position en rotation déterminée autorisant un verrouillage du bras mobile (6') avec le châssis de potence (6) lorsque l'inclinaison entre eux est inférieure à un angle minimal (Amin).

3. Dispositif d'attelage (1) selon la revendication 1 ou 2, **caractérisé en ce que** le moyen d'autoalignement (7) est sollicité élastiquement pour un engagement avec une partie saillante (8) du châssis de potence (6) ou du corps support (1'), cet engagement avec appui sous contrainte élastique, qui est effectif à partir de d'un angle d'inclinaison limite (Alim) entre le bras mobile (6') et le châssis de potence (6), tendant à solliciter le bras mobile (6'), sur lequel le moyen d'autoalignement (7) est monté, vers la position en rotation déterminée.

4. Dispositif d'attelage (1) selon l'une quelconque des revendications 1 à 3, **caractérisé en ce que** le moyen d'autoalignement (7) est une pièce rapportée, comprenant une partie arrière allongée (7') par laquelle elle est montée mobile en translation sur le bras mobile (6') et une partie avant (7") destinée à venir en engagement avec une partie saillante (8) du châssis de potence (6) ou du corps support (1'), cette partie avant (7") présentant avantageusement des zones de contact (9, 9') destinés à venir en engagement avec la partie saillante (8) et à réaliser un centrage progressif par coopération avec la partie saillante (8) lors d'un mouvement de basculement du bras mobile (6') vers le châssis de potence (6).

5. Dispositif d'attelage (1) selon l'une quelconque des revendications 1 à 4, **caractérisé en ce que** le moyen d'autoalignement (7) est une pièce rapportée et guidée en translation longitudinalement sur le bras mobile (6') par l'intermédiaire de deux arrangements coopérants pion (10, 11) / trou oblong (10', 11'), dont le premier arrangement (10, 10') sert avantageusement également pour la solidarisation du moyen d'autoalignement (7) avec le bras mobile (6') et dont le second arrangement (11, 11') sert avantageusement aussi pour la transmission de la sollicitation élastique.

6. Dispositif d'attelage (1) selon les revendications 3 et 5, **caractérisé en ce que** le moyen d'autoalignement (7) est maintenu par contrainte élastique dans une position de coulissement extrême vers l'extrémité inférieure (6") du bras mobile (6'), sans être en contact avec la partie saillante (8) du châssis de potence (6) ou du corps support (1'), lorsque l'angle d'inclinaison entre le bras mobile (6') et le châssis de potence (6) est supérieur à l'angle d'inclinaison limite (Alim).

7. Dispositif d'attelage (1) selon l'une quelconque des revendications 1 à 6, **caractérisé en ce que** le moyen d'autoalignement (7) est monté mobile sur le bras mobile (6), est situé entre le bras mobile (6') et le châssis de potence (6) et présente avantageusement une structure symétrique selon un plan longitudinal.

8. Dispositif d'attelage (1) selon l'une quelconque des revendications 1 à 7, **caractérisé en ce que** le moyen d'autoalignement (7) consiste en une plaque présentant un contour sensiblement en forme de Y, avec une partie avant (7') sensiblement en forme de V et comportant deux pentes inclinées intérieures (9 et 9') de guidage concourantes, la région du fond du V présentant avantageusement une forme sensiblement complémentaire de celle d'une partie saillante (8) du châssis de potence (6) ou du corps support (1'), avec laquelle cette partie avant (7') est destinée à venir en engagement.

9. Dispositif d'attelage (1) selon la revendication 3 ou l'une quelconque des revendications 4 à 8, pour autant qu'elles se rattachent à la revendication 3, **caractérisé en ce que** la partie saillante (8) du corps support (1') ou du châssis de potence (6) engagée par le moyen d'autoalignement (7) correspond à une chape fournissant le premier axe de pivotement (AP1).

10. Dispositif d'attelage (1) selon la revendication 9, **caractérisé en ce qu'**il comprend une pièce support de pivotement (12) montée articulée avec le châssis de potence (6) ou le corps support (1') par l'intermédiaire du premier axe de pivotement (AP1) et sur laquelle est montée articulée, par l'intermédiaire du second axe de pivotement (AP2), le bras mobile (6'), cette pièce support de pivotement (12) comportant des moyens de butée (13, 13') limitant l'excursion rotatoire du bras mobile (6') par rapport à la position en rotation déterminée autour du premier axe (AP1), par exemple par interaction avec le moyen d'autoalignement (7), également au-delà d'un angle d'inclinaison limite (Alim) entre le bras mobile (6') et le châssis de potence (6) autour du second axe (AP2).

11. Charrue (3), notamment charrue portée réversible, comprenant un dispositif d'attelage (1) à trois points d'accrochage (2, 2', 2") monté à l'avant du bâti (3') de la charrue (3) portant les corps de labour (3"), charrue (3) **caractérisée en ce que** le dispositif d'attelage (1) est un dispositif d'attelage (1) selon l'une quelconque des revendications 1 à 10.
